# DEMANDE DE BREVET EUROPEEN

(11) **EP 0 886 383 A1**
(43) Date de publication de la demande: **23.12.1998**
(21) Numéro de dépôt: 98401441.5
(22) Date de dépôt: 12.06.1998
(51) Int. Cl.: H04B 1/034, H04H 1/00

(54) **Système d'émission-réception pour la radiodiffusion touristique**

(30) Priorité: 16.06.1997 FR 9707431
(71) Demandeur: Sante Tourisme Radio, 76430 Saint Gilles de la Neuville (FR)
(72) Inventeur: Cacheleux, Yves, 76400 Fecamp (FR); LeCarpentier, Gérard, 76540 Thietreville (FR)
(74) Mandataire: Thibon-Littaye, Annick

(57) **Abrégé**

L'invention concerne un système d'émission-réception pour applications touristiques, comprenant un ou plusieurs émetteurs monofréquence (E₁) et une pluralité de récepteurs monofréquence en bande FM. Le système peut être utilisé sur un site archéologique (4), dans un autocar, sur un bateau (croisière), un club de vacances, etc. L'émetteur portable (E₁) est manipulé par un guide (G) accompagnant un groupe de visiteurs (U₁, U₂) du site (4), munis de récepteurs (R₁, R₂), calés sur une fréquence préétablie commune à l'émetteur (E₁). Pour des croisières en bateau, on peut prévoir des bornes fixes terrestres.

## Description

La présente invention concerne un système d'émission-réception pour la radiodiffusion touristique.

De façon plus particulière, l'invention vise un système de radio-émission à courte distance, dans la bande de radiodiffusion en modulation de fréquence, comprenant un émetteur fixe ou portable, à fréquence d'émission bloquée, et une pluralité de récepteurs portables verrouillés sur cette fréquence.

Dans le cadre de l'invention, le terme "radiodiffusion touristique" doit être entendu dans son acceptation la plus générale. Il comprend en particulier les systèmes de radiodiffusion touristique proprement dits, les systèmes destinés aux "autocaristes", aux clubs de vacances, aux organisations dites "tour operator" et au radioguidage des personnes dans des lieux divers : musées, etc.

Ces différentes applications seront détaillées ci-après.

Pour toutes ces applications, il est important que le touriste, ou de façon plus générale la personne à l'écoute d'informations, quelles qu'elles soient, soit muni d'un récepteur peu encombrant, calé sur une fréquence unique, celle de l'émetteur, facile d'utilisation, et en particulier ne nécessitant aucun réglage, sauf éventuellement un réglage du niveau sonore de l'écoute. En outre, la réception doit être individuelle, en ce sens que les informations diffusées ne doivent pas perturber les autres personnes se trouvant à proximité du récepteur, ce qui impose l'usage d'un écouteur.

De façon plus précise, "fréquence unique" ou "monofréquence", ne sont pas synonymes d'une seule fréquence utilisable pour le système d'émission-réception considéré dans sa globalité. En effet, si le récepteur destiné à une application ou à un groupe d'utilisateurs donnés doit être calé sur une fréquence unique propre à cette application ou à ce groupe, des fréquences différentes peuvent être associées à d'autres applications et/ou groupes d'usagers. A titre d'exemple non limitatif, dans un groupe bilingue de touristes, les touristes comprenant une première langue se voient confier des récepteurs calés sur une première fréquence, alors que les touristes comprenant une autre langue se voient confier des récepteurs calés sur une seconde fréquence. Chacun écoute les explications données par un guide ou les informations diffusées par une centrale dans sa propre langue.

D'autre part, il est également souhaitable que les émetteurs et, surtout, les récepteurs soient robustes, car à usage collectif et répétitif, et bon marché. Du fait des caractéristiques propres aux applications considérées et de leur taille réduite, ils peuvent être égarés facilement, voire emmenés par inadvertance par l'utilisateur qui oublie de le rendre après usage. Leur remplacement ne doit pas générer des frais importants.

Cela implique donc le recours à des composants peu onéreux et à des méthodes de fabrication compatibles avec une production en masse.

L'invention vise à remplir simultanément ces différents besoins.

Pour ce faire, selon une caractéristique importante de l'invention, le (ou les) émetteur(s) et les récepteurs mis en oeuvre dans le système d'émission-réception sont munis d'un dispositif de blocage de fréquence, qui peut être interne ou externe.

De façon avantageuse, les transmissions s'effectuent en modulation de fréquence.

L'invention a donc pour objet un système d'émission-réception pour la radiodiffusion touristique, comprenant au moins un émetteur et au moins un récepteur, le système utilisant une porteuse de fréquence unique préétablie comprise dans une bande de fréquences limitée par une borne supérieure et une borne inférieure, ledit système transmettant un signal audiofréquence et chaque récepteur étant équipé de transducteurs électroacoustiques, caractérisé en ce que chaque émetteur et chaque récepteur comprend un dispositif de blocage de fréquence sur ladite fréquence préétablie et en ce que au moins un émetteur dudit système d'émission-réception est un émetteur mobile.

L'invention sera mieux comprise et d'autres caractéristiques et avantages apparaîtront à la lecture de la description qui suit en référence aux figures annexées, parmi lesquelles :
- la figure 1 illustre schématiquement l'architecture d'un système d'émission-réception selon l'invention ;
- la figure 2 illustre un exemple d'un mode de réalisation d'un dispositif de blocage de fréquence utilisé par l'invention, concernant des émetteurs et des récepteurs à synthétiseur de fréquences ;
- la figure 3 illustre un équipement utilisé pour l'application du système d'émission-réception à un voyage organisé en autocar ;
- la figure 4 illustre schématiquement l'architecture d'un système d'émission-réception dans son application à une visite guidée ;
- la figure 5 illustre schématiquement l'architecture d'un système d'émission-réception dans son application à la couverture d'une aire géographique par des bornes émettrices fixes diffusant des informations spécifiques à des zones de ce site ;
- la figure 6 illustre schématiquement l'architecture d'un système d'émission-réception dans son application à la diffusion d'informations dans un club de vacances ou similaire ;
- et les figures 7 et 8 illustrent schématiquement deux modes de réalisation pratique des boîtiers des récepteurs.

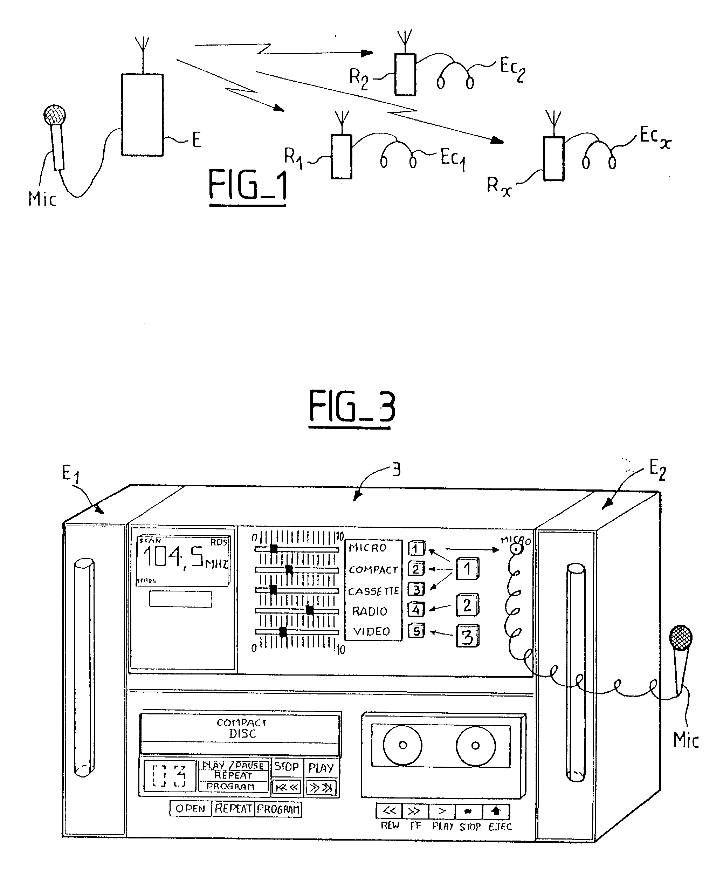

Pour fixer les idées, on va tout d'abord se placer dans le cadre d'une application que l'on appellera de radioguidage. L'architecture du système d'émission-réception mis en oeuvre pour cette application est illustrée schématiquement par la figure 1.

On suppose que le guide (non représenté) dispose d'un émetteur E conforme à l'invention, émetteur dont les caractéristiques vont être détaillées ci-après. Celui-ci est muni d'un microphone Mic, intégré ou non à l'émetteur E. Chaque touriste (non représenté) dispose d'un récepteur, R₁ à Rₓ, dont les caractéristiques vont également être détaillées ci-après. A *priori,* comme il a été indiqué, l'écoute s'effectue via un casque ou, pour le moins, un écouteur individuel, Ec₁ à Ecₓ, pour ne pas perturber le voisinage.

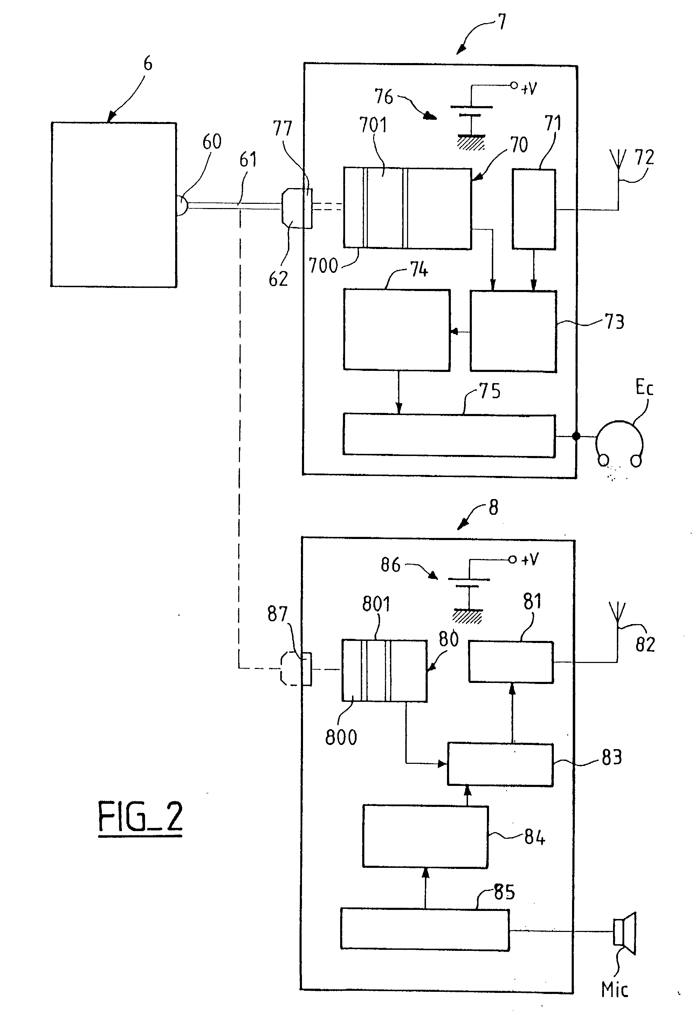

Selon une première caractéristique importante de l'invention, la fréquence d'émission f, ainsi que celle de réception commune aux récepteurs R₁ à Rₓ, est calée sur une valeur fixe prédéterminée. Diverses méthodes peuvent être mises en oeuvre. On va décrire, à titre d'exemple non limitatif, l'une de ces méthodes et l'appareillage associé, par référence à la figure 2.

Pour fixer les idées, on suppose que le système d'émission-réception fonctionne dans la bande de fréquences dont les bornes inférieure et supérieure sont 183,5 MHz et 186,5 MHz, soit une largeur de bande de 3 MHz. On peut subdiviser cette bande en n canaux, par exemple 127 canaux. L'écart entre chaque canal est donc de 23,62 KHz. On prévoit une zone de silence entre canaux de largeur d*f*_{*s*} = 3,62 KHz.

Sur la figure 2, on a décrit un système d'émission-réception comprenant un dispositif de blocage de fréquence externe, un ou plusieurs émetteurs, et des récepteurs à synthétiseur de fréquences numérique.

Sous la référence générale 7, on a représenté un boîtier récepteur 7. Celui-ci comprend les blocs suivants : un étage HF 71 alimenté par une antenne 72, un étage synthétiseur de fréquences 70, un mélangeur de fréquences 73, un étage de fréquences intermédiaires 74 et un étage audiofréquence 75 alimentant un écouteur Ec ou un transducteur électroacoustique similaire. Il faut naturellement y adjoindre une alimentation en énergie électrique 76, délivrant une ou plusieurs tensions +V, distribuées aux différents circuits.

*Per se*, cette configuration est bien connue, et il est inutile de la développer plus avant.

De même, on a représenté sous la référence générale 8 la configuration d'un émetteur. Celle-ci est sensiblement symétrique à la configuration du récepteur 7. L'émetteur comprend en effet les blocs suivants : un étage audiofréquence 85 amplifiant les signaux en provenance d'une source externe ou interne, par exemple les signaux de sortie d'un microphone Mic, un étage de fréquence intermédiaire 84, un synthétiseur de fréquence numérique 80, un étage mélangeur 83 recevant les signaux de l'étage de fréquence intermédiaire 84 et du synthétiseur de fréquence 80 et un étage HF 81 alimentant l'antenne d'émission 82. On prévoit également une alimentation en énergie électrique 86 fournissant une ou plusieurs tensions +V, distribuée aux différents circuits. Cette configuration, per se, est également bien connue.

Dans les deux cas, la fréquence de fonctionnement est déterminée, en définitive, par l'étage synthétiseur de fréquences, 70 ou 80.

Selon une caractéristique de l'invention, dans l'exemple de réalisation particulier illustré par la figure 2, le synthétiseur de fréquence est calé sur une fréquence prédéterminée par un boîtier extérieur de codage 6.

Pour ce faire, les récepteurs et émetteurs comportent un port de communication avec l'extérieur, 700 et 800, respectivement, fonctionnant conformément à un protocole normalisé ou non.

Le boîtier de codage 6 est muni d'un connecteur de sortie 60, d'un câble de liaison 61 et d'un connecteur de terminaison du câble 62. De même, les boîtiers des récepteurs 7 et des émetteurs 8 sont munis de connecteurs complémentaires, 77 et 87, respectivement, sur lesquels peut s'enficher le connecteur de terminaison 62.

Le boîtier de codage 6, lorsqu'il est connecté à un récepteur 7 ou à un émetteur 8, transmet aux circuits synthétiseurs de fréquences, 70 ou 80, via les ports de communication, 700 ou 800, des données numériques sous forme série ou parallèle. Ces données sont enregistrées dans un registre ou une mémoire, 701 ou 801, alimentée en permanence par une tension fournie par l'alimentation en énergie électrique, 76 ou 86, de manière à conserver ces données. Les données ainsi reçues et enregistrées servent à programmer le synthétiseur de fréquence et à caler l'émetteur 8 ou le récepteur 7 sur une fréquence unique.

En dehors de la mémoire de stockage des données de programmation, les autres circuits peuvent être alimentés en énergie de façon intermittente, de manière à augmenter l'autonomie des boîtiers. On peut d'ailleurs adjoindre un circuit de mise en veilleuse automatique après un laps de temps prédéterminé de non-réception ou de non-réception de signaux. En outre, et en particulier pour les récepteurs 7, la mise en fonctionnement, c'est-à-dire l'alimentation de tous les circuits électroniques, peut être déclenchée par l'introduction de la prise d'écouteur Ec (a *priori* une prise de type jack).

Dans une variante préférentielle de l'invention, le boîtier 6 est préalablement codé en usine. En définitive, c'est le boîtier de codage 6 qui joue le rôle de dispositif de blocage de fréquence, puisque ce sont les données qu'il transmet qui programment le synthétiseur de fréquence et, par là, la fréquence de fonctionnement, en émission ou en réception. La différence notable avec les solutions précédemment décrites est que ce dispositif de blocage de fréquence est extérieur aux boîtiers émetteurs 8 ou récepteurs 7.

Le boîtier de codage 6 est fourni, en un ou plusieurs exemplaires, avec les autres composants du système d'émission réception, c'est-à-dire au moins un émetteur 8 et plusieurs récepteurs 7. L'utilisateur du système, c'est-à-dire dans ce cas le responsable ou acheteur du système (et non le simple usager qui se voit remettre un récepteur 7), peut alors programmer à loisir les boîtiers, émetteurs 8 ou récepteurs 7, dont il est locataire ou propriétaire.

Dans une variante de réalisation le boîtier 6 permet de caler les boîtiers émetteurs et récepteurs sur une fréquence choisie parmi un nombre restreint de fréquence de la gamme possible. Il est alors notamment possible de caler un ou plusieurs émetteurs sur une première fréquence de travail et un premier lot de récepteurs sur cette fréquence, et un ou plusieurs émetteurs sur une seconde fréquence de travail et un second lot de récepteurs sur celle-ci. Cela permet, par exemple, comme il le sera montré ci-après, de transmettre des informations dans deux langues différentes ou d'émettre des signaux audiofréquence provenant de deux sources distinctes, les émissions étant destinées à deux groupes d'usagers également distincts.

Dans une variante supplémentaire, on met à la disposition du responsable du système d'émission-réception plusieurs boîtiers de codage 6. Chaque boîtier est préalablement codé sur une fréquence distincte, ce qui permet de programmer les récepteurs 7, par lots, sur des fréquences de réception différentes ou au contraire de programmer tous les récepteurs sur une même fréquence, la valeur nominale de cette fréquence étant modifiée dans le temps, soit en fonction de l'application, soit en fonction de la zone géographique d'utilisation (bandes de fréquences allouées selon les pays par exemple).

On va maintenant décrire de façon plus détaillée plusieurs applications du système d'émission-réception à dispositif de blocage de fréquence conforme à l'invention.

Une première application importante concerne le radioguidage touristique dans le cadre de ce qui est connu sous le vocable "autocaristes".

Pour les voyages organisés par un "tour opérator", en France ou à l'étranger, l'autocar est le plus souvent équipé de nombreuses commodités pour l'agrément du touriste, notamment d'un équipement audiovisuel complet permettant de visionner des films vidéo et/ou de la musique d'ambiance. La musique ou le son diffusé (musique d'ambiance ou bande sonore du film) doit être suffisamment fort et distinct pour les voyageurs intéressés, tout en ne perturbant pas les voyageurs ayant d'autres centres d'intérêts ou occupations (lecture, repos, etc.).

En outre, lors des visites guidées sur les sites touristiques, le touriste peut désirer bénéficier des commentaires du guide, tout en s'attardant sur une particularité du site (monument, etc.), par exemple pour la photographier. Enfin, dans les sites touristiques, il est courant que de nombreux groupes soient présents au même moment. Les commentaires des différents guides, éventuellement dans plusieurs langues, et le brouhaha qui accompagne le va-et-vient de nombreuses personnes sur le site perturbe fortement la visite.

L'invention permet de pallier les inconvénients évoqués ci-dessus et permet de rendre optimales les conditions du voyage et des visites sur site.

Pour ce faire, le touriste se voit remettre à l'entrée de l'autocar un récepteur personnel miniature, conforme à l'invention, muni d'un casque ou d'un écouteur.

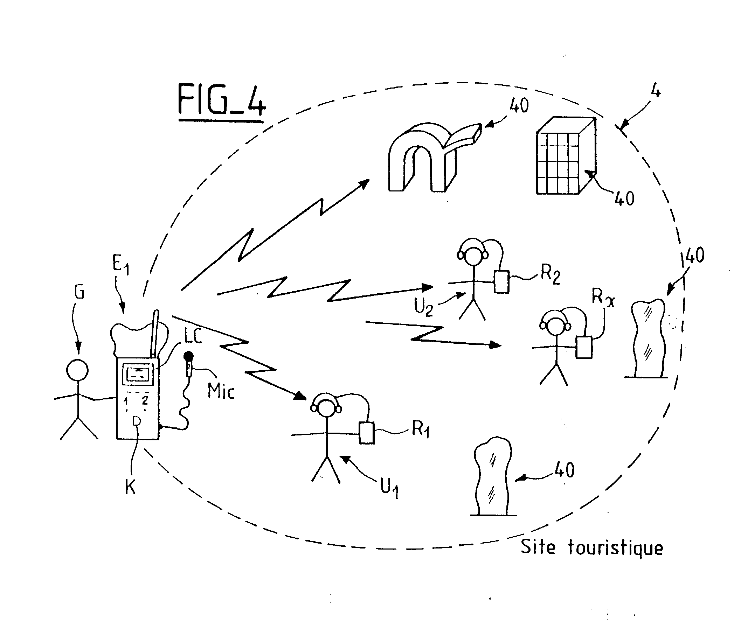

L'équipement émetteur à bord de l'autocar peut comprendre un simple émetteur portable (figure 1 : E), ou, de façon avantageuse, un ou deux émetteurs, couplé(s) à une console audio et/ou vidéo 3. Dans l'exemple décrit, comme le suggère la figure 3, la console 3 comprend, notamment, une entrée pour un microphone Mic, un lecteur de disques compacts, un lecteur de cassettes audio, un lecteur de cassettes vidéo et un récepteur radiophonique classique. Toutes les sources sonores peuvent être, soit sélectionnées individuellement, soit mixées. Per se, cette console est tout à fait classique, et il est inutile de la décrire plus avant.

Selon une caractéristique de l'invention, le son résultant de la sélection ou du mixage n'est cependant pas diffusé directement, par exemple par des haut-parleurs, du moins dans un mode normal. On adjoint à cette console 3 deux émetteurs E₁ et E₂ (dans l'exemple décrit), représentés de part et d'autre de celle-ci.

De façon plus précise, ces émetteurs, E₁ et E₂, sont encastrés dans des logements (non représentés) comprenant divers contacts et notamment des contacts d'alimentation en énergie électrique des émetteurs et une entrée de signaux électriques audiofréquences.

Les contacts d'alimentation permettent également, de façon classique, la recharge d'un accumulateur d'alimentation électrique des émetteurs, E₁ et E₂.

L'entrée de signaux audiofréquences permet de transmettre les signaux, en provenance de la source sonore sélectionnée ou mixée, à au moins l'un des émetteurs, par exemple l'émetteur E₁. Celui-ci est calé sur une des fréquences sélectionnables, par exemple par les commutateurs E₁ à E₈ du dispositif de blocage en fréquence (figure 5). L'émission s'effectue donc sur ce canal.

Les récepteurs confiés aux voyageurs sont naturellement calés sur cette fréquence, ce qui permet la réception dans l'autocar, par les seules personnes intéressées, des informations émises, son ou musique d'ambiance.

Dans une autre variante de réalisation, on peut distribuer des séries de récepteurs calés sur des fréquences différentes, par exemple deux séries de récepteurs : la première série de récepteurs étant calée sur la fréquence d'émission du premier émetteur E₁ et la seconde série de récepteurs sur la seconde fréquence d'émission. A titre d'exemple, la première fréquence (premier canal), émise par l'émetteur E₁, est attribuée au son du film vidéo projeté, et la seconde fréquence (second canal), émise par l'émetteur E₂, est attribuée à la diffusion de musique d'ambiance.

Selon une alternative de cette variante, si les récepteurs sont munis d'un commutateur multiposition accessible de l'extérieur, c'est l'usager qui se branchera sur un canal ou l'autre, selon son centre d'intérêt.

Selon une autre caractéristique avantageuse, le microphone Mic peut être rendu prioritaire sur toute autre source sonore. Il peut s'agir d'un microphone branché sur la console principale 3 ou d'un microphone branché sur l'un des émetteurs, E₁ ou E₂. Dans cette dernière variante, le socle d'insertion des émetteurs comporte également une prise, par exemple de type "Jack", pour véhiculer le signal du microphone Mic vers la console 3. Si le microphone Mic est effectivement rendu prioritaire, l'annonce s'effectue simultanément par des haut-parleurs de l'équipement interne de l'autocar alimentés par la console 3 et par l'un des émetteurs, par exemple E₁, et se substitue aux signaux audiofréquences précédemment diffusés. Une fois le microphone Mic inactivé, l'émission reprend son cours normal.

Pour les visites, le guide décroche un des émetteurs portables, E₁ ou E₂, et se rend sur le site accompagné des touristes intéressés. Dans une variante supplémentaire, la visite peut comporter plusieurs guides, chacun accompagnant un groupe de touristes. Dans ce cas, chaque guide emporte un des postes émetteurs disponibles, E₁ ou E₂, dans l'exemple décrit. Le canal utilisé peut être le même ou différent. A titre d'exemple, on peut imaginer deux groupes linguistiques distincts. Dans ce dernier cas, les touristes du premier groupe seront munis d'un récepteur calé sur un premier canal, celui de l'émetteur E₁, et le second groupe, de récepteurs calés sur un second canal, celui de l'émetteur E₂.

La figure 4 illustre schématiquement l'architecture d'un système d'émission-réception pour un radioguidage touristique sur un site 4 comportant plusieurs monuments ou curiosités 40, système comprenant un seul émetteur E₁, confié au guide G, et plusieurs récepteurs, R₁ à Rₓ, un par touriste. Cette architecture est tout à fait semblable à celle décrite en regard de la figure 1. Dans cette configuration, les utilisateurs, c'est-à-dire les touristes, U₁ à Uₓ, tout en bénéficiant du commentaire du guide G, peuvent gérer plus librement, et le temps passé devant chaque monument ou curiosités 40, et leur parcours, sans être gênés par d'autres commentaires ou bruits divers.

Pour fixer les idées, l'émetteur E₁ peut être calculé pour que la portée de l'émission soit de l'ordre de 150 à 200 m, ce qui couvre la majorité des surfaces de sites touristiques, sans interférer avec des zones extérieures à ceux-ci.

Le guide G utilise habituellement un microphone Mic pour émettre des commentaires reçus par les récepteurs R₁ à Rₓ. On peut en outre prévoir un lecteur LC de cassettes audio préenregistrées ou tout autre système similaire, intégré dans l'émetteur E₁. La commutation entre ces deux sources s'effectue classiquement par un commutateur à deux positions K.

Une autre application importante d'un système d'émission-réception selon l'invention concerne les "croisiéristes". L'une des préoccupations majeures pour un touriste débarquant dans une île ou, de façon plus générale, dans un port ou un lieu touristique, nouveau pour lui, est l'accueil et la récolte d'informations et de renseignements divers. Naturellement, il existe le plus souvent un syndicat d'initiative ou un office du tourisme dont l'une des missions essentielles est d'accueillir les touristes, de leur fournir des renseignements et de mettre à disposition des brochures d'information. Cependant se pose le problème des heures d'ouverture qui peuvent ne pas coïncider avec l'heure du débarquement. En outre, il est nécessaire de connaître l'adresse du syndicat d'initiative, s'il existe, et, dans tous les cas de s'y déplacer. On peut également préparer à l'avance l'excursion, mais c'est un souci que l'on peut désirer éviter pendant une période de congés.

L'invention vise là encore à pallier ces inconvénients. Le touriste, participant à une croisière (dans le sens large de ce terme), se voit remettre, à la descente du bateau ou, de façon préférentielle à son arrivée sur le bateau si celui-ci est équipé de moyens audiovisuels (comme dans le cas des autocars : figure 3), un récepteur Rₓ conforme à l'invention.

La zone de débarquement et les zones proches peuvent être munies d'une ou plusieurs bornes fixes d'émission, chaque borne couvrant une aire déterminée.

La figure 5 illustre schématiquement un exemple d'un tel système comprenant trois bornes émettrices, BE₁ à BE₃, couvrant les zones respectives Z₁ à Z₃.

A titre d'exemple, lors de son débarquement, un touriste Uₓ, muni d'un récepteur Rₓ calé sur la fréquence émise par la borne BE₁, entre dans une première zone Z₁ (zone de couverture de BE₁) et capte des informations le guidant vers des sites à visiter ou des commerces. Lorsqu'il quitte cette zone Z₁, il entre dans une deuxième zone, par exemple la zone Z₂, zone de couverture de la borne émettrice BE₂, ou la zone Z₃, zone de couverture de la borne émettrice BE₃. Il capte alors de nouvelles informations, spécifiques à ces zones (monuments particuliers, sites touristiques, etc.).

Dans une première variante, la fréquence d'émission (canal) est commune aux différentes bornes et tous les récepteurs Rₓ sont calés sur cette seule fréquence. Il est alors nécessaire que la puissance d'émission soit calculée pour qu'il n'y ait pas de recouvrement entre zones.

Dans une seconde variante, la fréquence d'émission (canal) est distincte pour chaque borne. Il est alors nécessaire que l'on puisse opérer la sélection parmi plusieurs canaux. Ce résultat peut être obtenu par la mise en oeuvre d'un dispositif de blocage de fréquence, c'est-à-dire comportant un commutateur à plusieurs positions, ou la mise à disposition de plusieurs récepteurs strictement monofréquence.

Lorsque les touristes rembarquent, les récepteurs sont récupérés par l'organisateur de la croisière.

Les informations diffusées par les bornes émettrices peuvent être permanentes ou semi-permanentes. Il suffit alors de les munir d'un lecteur approprié : lecteur de disque compact, lecteur de bande en boucle, mémoire numérique, etc. On peut également prévoir une programmation qui dépend de divers paramètres horodatés : jour de la semaine, heure de la journée, etc. On peut enfin installer un système permettant de "rafraîchir" en temps réel les informations diffusées. Cette disposition est notamment avantageuse pour toutes les informations à caractère éphémère : informations météorologiques, appels personnels, etc. Pour ce faire, on peut relier les bornes émettrices à une station centrale (par exemple à l'office du tourisme ou à toute autre autorité habilitée) par une liaison terrestre (câble coaxial, liaison téléphonique, etc.) ou une liaison radio. Il est nécessaire, dans ce dernier cas de munir les bornes émettrices d'un récepteur fonctionnant sur une fréquence différente de la ou des fréquence(s) d'émission des bornes.

L'énergie électrique nécessaire au fonctionnement des bornes émettrices, BE₁ à BE₃, peut être fournie par le secteur ou des accumulateurs rechargeables, par exemple par des panneaux solaires ou des éoliennes.

Une autre application du système d'émission-réception selon l'invention intéresse les clubs de vacances ou similaires (club hôtel, etc.). Cette application reprend en grande partie les dispositions des deux applications qui viennent d'être décrites.

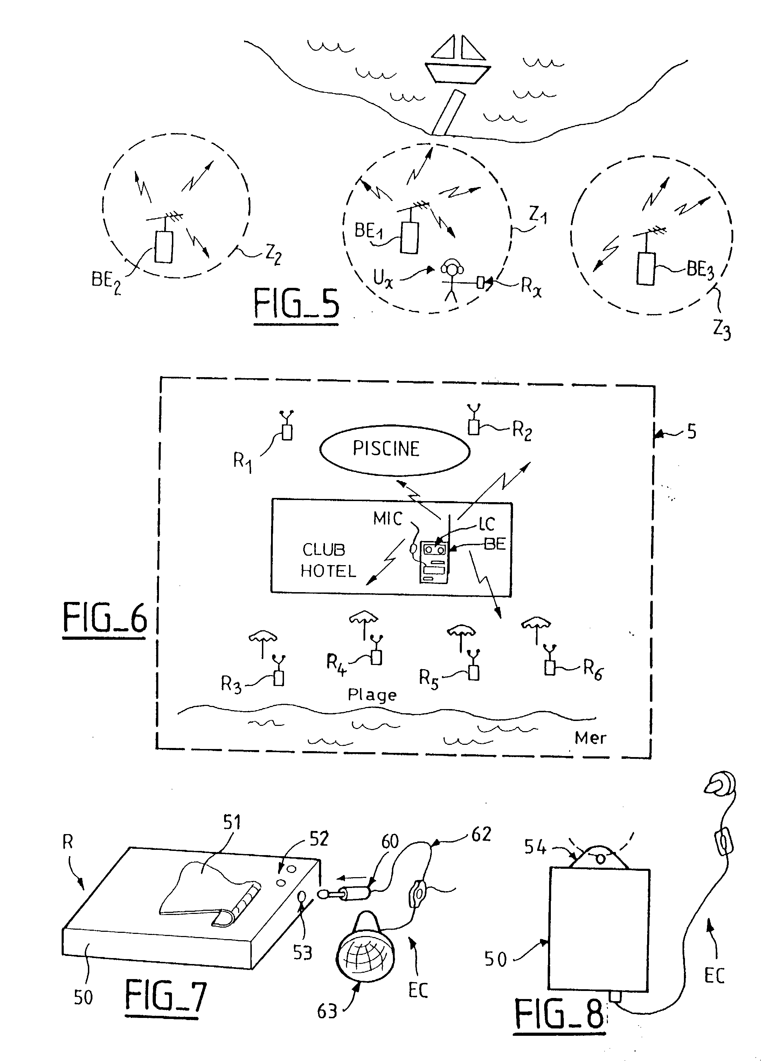

La figure 6 illustre un exemple d'architecture d'un tel système. Une borne d'émission unique BE, placée dans l'enceinte 5 du club, suffit en général à couvrir la totalité du site de façon à diffuser des informations captées par les membres du club. Chacun est muni d'un récepteur, R₁ à R₆, conforme à l'invention, calé sur la fréquence d'émission. Le club peut, par l'intermédiaire de la borne émettrice BE diffuser des informations concernant les activités du club ou tout autre message, ou encore de la musique d'ambiance ou relayer des informations générales.

La borne émettrice BE peut être indifféremment fixe ou être constituée d'un émetteur portable comme le suggère la figure 6. Bien que sur cette figure 6, on a représenté une émetteur BE muni seulement d'un microphone Mic et d'un lecteur de cassette audio, il est clair que l'on peut compléter l'installation par d'autres sources sonores. La borne BE pourrait notamment être constituée d'une console similaire à la console 3 de la figure 3, associée à un ou plusieurs émetteurs portables.

Dans ce cas, le ou les émetteur(s) portable(s) peuvent être utilisés lors d'excursions ou de visites guidées hors du site.

Une architecture similaire peut être utilisée pour la visite commentée d'un musée, avec une seule série de récepteurs monofréquence confiés aux visiteurs, ou plusieurs séries, les récepteurs de chaque série étant calés sur une fréquence spécifique, par exemple pour diffuser des commentaires dans différentes langues. Il est alors nécessaire d'utiliser plusieurs émetteurs.

De même, l'invention peut s'appliquer au cyclotourisme. Chaque participant est muni, de façon similaire à ce qui à été décrite en regard de la figure 4, d'un récepteur conforme à l'invention. Le guide peut être l'un des participants à la randonnée, ou si l'émetteur est suffisamment distant rester à distance. On peut encore prévoir, comme dans le cas de l'application "croisiériste", décrite en regard de la figure 5, des bornes émettrices placées le long du parcours.

Pour toutes les applications, et dans le seul but de fixer les idées, on va maintenant préciser quelques caractéristiques techniques principales associées aux récepteurs et aux émetteurs.

En ce qui concerne les récepteurs, on adoptera avantageusement, pour le boîtier, le format d'une carte de crédit, tel que défini par les normes ISO pour la longueur et la largeur. L'épaisseur sera de l'ordre de 10 à 15 mm. L'utilisation d'une ou deux piles de type LR03, soit 1,5 V ou 3 V nominal, permettra d'obtenir une autonomie multiple de 6 heures (12, 18 ou 24 heures) avec les circuits intégrés couramment disponibles. La fréquence de réception bloquée peut être pré-réglée en usine. On peut cependant admettre que certains modèles puissent autoriser la sélection d'un canal parmi un nombre restreint de canaux prédéfinis (par exemple trois canaux), si le récepteur est muni d'un commutateur multiposition accessible de l'extérieur. La fréquence dépend naturellement de l'application précise et des normes en vigueur dans le pays concerné. A titre d'exemple, elle peut être choisie dans la gamme de fréquences précitée couvrant la bande 183,5 à 186,5 MHz ou encore dans la bande 175,5 à 178,5 MHz.

Le système d'attache du boîtier peut prendre avantageusement deux formes principales.

Sur la figure 7, le boîtier 50 du récepteur est muni d'un clip 51 qui permet de l'accrocher à la ceinture ou au revers d'un vêtement.

Sur la figure 8, le boîtier 50 comporte un système d'attache 54 de type pendentif, permettant de le porter autour du cou en médaillon.

Pour les piles, on peut prévoir des contacts de test 52 accessibles de l'extérieur évitant d'ouvrir le boîtier. Le boîtier 50 comporte enfin une sortie audiofréquence, par exemple du type prise jack femelle 53. Le casque ou l'écouteur Ec est muni d'une prise jack mâle 60 dont l'insertion dans la sortie audiofréquence 53 entraîne avantageusement la mise en service du récepteur R. Enfin les fils de liaison avec le ou les transducteur(s) électroacoustique(s) 63 servent aussi d'antenne de réception des signaux électromagnétiques à capter. Enfin, le réglage du volume sonore s'effectuera de préférence par une résistance variable à molette 61, placée sur le fil de liaison 62 ou directement sur le casque Ec.

Le nombre de récepteurs bien, qu'*a priori* non limité, sera typiquement de l'ordre de trente à cinquante, ce qui couvre, par exemple, les besoins d'une application "autocariste".

Les caractéristiques techniques des émetteurs varient selon qu'il s'agit d'une borne fixe ou d'un émetteur portable, notamment en ce qui concerne la puissance émise.

Selon les applications et le pays d'utilisation, la puissance d'émission peut varier entre un minimum de 10 mW à un maximum de 100 mW à 2W, selon les normes en vigueur.

De même la source d'alimentation en énergie électrique sera, par exemple, un accumulateur rechargeable de 12 V pour un émetteur mobile, et une source externe, telle que le secteur, 125 à 245 V, 50 ou 60 Hz, selon les pays. On peut également utiliser des panneaux solaires ou une source d'énergie électrique éolienne rechargeant un accumulateur.

L'antenne d'émission est constituée d'un simple brin dans le cas d'un émetteur mobile et d'une antenne externe alimentée par un câble coaxial.

A la lecture de ce qui précède, on constate aisément que l'invention atteint bien les buts qu'elle s'est fixés.

Il doit être clair cependant que l'invention n'est pas limitée aux seuls exemples de réalisations explicitement décrits, notamment en relation avec les figures 1 à 8.

Il doit être clair aussi que, bien que particulièrement adaptée à des applications de radioguidage touristique ou de radiodiffusion d'informations, également de nature touristique ou culturelle, on ne saurait cantonner l'invention à ce seul type d'applications. Elle s'applique tout aussi bien à d'autres types de système d'émission-réception à fréquence fixe, utilisant un dispositif de blocage de fréquence.

A titre d'exemple non limitatif, le récepteur pourrait constituer un objet publicitaire pour des stations de radiodiffusion émettant sur la bande FM ou des annonceurs utilisant des temps de publicité sur ces stations. Le boîtier est alors muni d'un logo ou signes distinctifs rappelant le nom de la station ou de l'annonceur. Sachant que d'une région à l'autre la fréquence d'émission allouée est différente, le récepteur distribué est un récepteur monofréquence, pré-réglé en usine sur le canal approprié pour la région ou réglée à l'aide d'un commutateur multiposition.

## Revendications

1. Système d'émission-réception pour la radiodiffusion touristique, comprenant au moins un émetteur (E) et au moins un récepteur (R₁-Rₓ), le système utilisant une porteuse de fréquence unique préétablie comprise dans une bande de fréquences limitée par une borne supérieure et une borne inférieure, ledit système transmettant un signal audiofréquence et chaque récepteur étant équipé de transducteurs électroacoustiques (EC₁-ECₓ), caractérisé en ce que chaque émetteur (E) et chaque récepteur (R₁-Rₓ) comprend un dispositif de blocage de fréquence sur ladite fréquence préétablie et en ce que au moins un émetteur (E) dudit système d'émission-réception est un émetteur mobile.

2. Système selon la revendication 1, caractérisé en ce que ledit émetteur mobile est constitué par au moins un émetteur portable (E₁-E₂) monté à bord d'un véhicule, en ce que ce véhicule comprend en outre un ensemble audiovisuel (3) générant au moins un signal audiofréquence, en ce que ledit ensemble audiovisuel (3) comprend des moyens de couplage électrique à chaque émetteur portable (E₁-E₂) pour retransmettre ledit signal audiofréquence via cet émetteur (E₁-E₂), de manière à ce que ce signal audiofréquence soit diffusé par lesdits transducteurs électroacoustiques (Ec₁-Ecₓ) des récepteurs (R₁-Rₓ).

3. Système selon la revendication 2, caractérisé en ce que ledit véhicule est un navire de croisière comportant à bord au moins un desdits émetteurs, en ce que ledit système comprend en outre des émetteurs fixes sous la forme de bornes émettrices (BE₁-BE₃) disposées sur au moins une aire terrestre proche d'une zone de débarquement dudit navire de croisière, en ce que chaque borne (BE₁-BE₃) couvre une zone distincte (Z₁-Z₃) d'une zone géographique déterminée de ladite aire terrestre, et en ce que ledit signal audiofréquence transmis par chacune desdites bornes émettrices (BE₁-BE₃) consiste en des informations concernant la zone (Z₁-Z₃) qui lui est associée et reçues par lesdits récepteurs (Rₓ) présents dans cette zone (Z₁).

4. Système selon la revendication 1 ou 2, caractérisé en ce que ledit émetteur mobile est un émetteur portable (E₁) muni d'un microphone (Mic) et d'une source d'informations préenregistrées (LC), en ce que la portée dudit émetteur portable (E₁) permet de couvrir un site (4) d'étendue déterminée et en ce que ledit signal audiofréquence consiste en des informations concernant ledit site (4).

5. Système selon la revendication 4, caractérisé en ce que ledit site est un site archéologique (4), en ce qu'il est prévu au moins un émetteur portable (E₁) manipulé chacun par un guide (G) accompagnant un groupe de visiteurs (U₁, U₂) de ce site (4), en ce que chaque visiteur (U₁, U₂) est muni d'un desdits récepteurs (R₁, R₂), calé sur une fréquence préétablie commune audit émetteur.

6. Système selon la revendication 4, caractérisé en ce que ledit site est un club de vacances (5) comprenant au moins un desdits émetteurs (BE) et une pluralité desdits récepteurs (R₁-R₆), calés sur une fréquence préétablie commune audit émetteur (BE).

7. Système selon l'une quelconque des revendications précédentes, caractérisé en ce que lesdits transducteurs électroacoustiques équipant chacun desdits récepteurs (R) consistent en un casque ou un écouteur (EC) de façon à permettre la diffusion privative dudit signal audiofréquence.

8. Système selon l'une quelconque des revendications 1 à 7, caractérisé en ce que chacun desdits récepteurs (R) est contenu dans un boîtier (50), muni d'un clip (51) permettant d'accrocher ledit boîtier (50) à la ceinture ou au revers d'un vêtement.

9. Système selon l'une quelconque des revendications 1 à 7, caractérisé en ce que chacun desdits récepteurs (R) est contenu dans un boîtier (50), muni d'une attache (54) de type pendentif, permettant de porter ledit boîtier autour du cou en médaillon.

10. Système selon l'une quelconque des revendications précédentes, caractérisé en ce que ladite fréquence déterminée est choisie dans la bande de radiodiffusion en modulation de fréquence.
